# EUROPEAN PATENT APPLICATION

(11) **EP 1 901 250 A1**
(43) Date of publication of application: **19.03.2008**
(21) Application number: 07253206.2
(22) Date of filing: 15.08.2007
(51) Int. Cl.: G07G 1/00, G01G 19/414

(54) **Self-checkout terminal including scale with remote reset**

(30) Priority: 07.09.2006 US 517132
(71) Applicant: NCR Corporation, Dayton, Ohio 45479 (US)
(72) Inventor: Roquemore III, John Peter, Snellville, GA 30039 (US)
(74) Representative: Williamson, Brian

(57) **Abstract**

A self-checkout system comprises a plurality of self-service checkout stations and at least one remote assistant terminal. Each of the plurality of self-service checkout stations comprises a barcode scanner, a scale, and a payment terminal, thus, allowing customers to enter items and pay for such items without the assistance of a cashier. The remote assistant terminal is in communication with each of the plurality of self-service checkout stations, allowing an assistant to monitor the operations at each of the plurality of self-service checkout stations. The remote assistant terminal includes a reset zero option that may be used to trigger a reset zero operation at the scale of one of the self-service checkout stations. Following activation of the reset zero option, a reset zero instruction is delivered to a processor that performs the reset zero operation for the scale. In an alternative embodiment, the reset zero operation is automatically performed.

## Description

This invention relates generally to methods and systems for facilitating transactions at a self-checkout terminal and more particularly, to methods and systems for facilitating transactions at self-checkout terminals with a scale.

Self-checkout terminals (also referred to herein as "self-checkout stations") at grocery stores and other retail stores are well known. Such terminals permit a consumer to conduct a transaction within a retail or other establishment without the need for a cashier. A single self-checkout attendant may be used to monitor a plurality of self-checkout lanes. The self-checkout attendant generally monitors the self-checkout lanes for security purposes. At the same time, the self-checkout assistant is available to assist customers should problems arise with the self-checkout process.

When using a self-checkout terminal, the individual consumer presents items for purchase to sensors at the terminal, such as a keypad, scale and barcode scanner, so the terminal can identify the items and a corresponding price. When the consumer indicates all items for purchase have been presented to the terminal, a sub-total is accumulated, any taxes and discounts are computed, and a total amount due is displayed for the consumer. The terminal then allows the consumer to select a payment method. The terminal presents menu selections to the consumer so funds are transferred to the retailer's account. Upon confirmation of payment, the items are released to the consumer.

A self-checkout terminal typically includes a display, a product scanner for reading universal product codes (i.e., barcodes), and a checkout area (also referred to herein as a bag area) for holding items once they have been scanned. The checkout area may include a motor driven belt to carry items for which a purchase has been verified to a collection area where the items may be bagged by the customer.

Many items purchased by a customer will only require a scan of the UPC symbol to determine the price. However, the prices of other items are determined by their weight. For these products, a scale must be provided on the terminal. This scale is often integrated as a single unit with the product scanner. In particular, such scales typically include a scale platform supported by one or more load cells. An aperture is typically provided in the center of the platform through which scanning beams from the product scanner are projected.

In addition to the above-described scale associated with the product scanner, many self-checkout terminals also include an additional scale positioned in the bag area or belt. Such scales help track items during checkout following scanning and operate to reduce the likelihood that the consumer leaves without scanning all of the items or exchanges scanned items with more expensive items that have not been scanned. By monitoring the weight of items placed on the bag area, the security application is able to determine some actions of the consumer for purposes of detecting fraud or operator error by a consumer. For example, the change in weight detected by the scale of the bag area may be used to determine the weight of an item just placed on the bag area. This item weight may then be compared to the expected weight of the item stored in a database or other memory. If the weights are different, the security application program notifies the consumer and prompts the consumer to remove the item and scan the item again to rectify the discrepancy. Following successful scanning and bagging by the customer, the bag may be removed from the bag area. Once the bag is removed, the scale must be reset to zero in anticipation of the next set of items to be placed in the bagging area.

In order to ensure smooth operation of the self-checkout process, including proper weighing for pricing and proper weighing for security purposes, the scales of the self-checkout terminal must be accurate. For example, the scales must display a predetermined reference value, normally zero, when no merchandise item is being weighed. This helps ensure that the change in the output display produced by a merchandise item being weighed will accurately represent the true weight of the item. Through use, the zero reference of the scale may change due to numerous causes including the accumulation of foreign matter on the scale platform or the load cells, a change in the position of the scale platform, the effect of temperature on the electronic components, and hysteresis (especially after the weighing of a heavy object). In self-checkout terminals, a zero reference change is particularly common since there is no cashier to perform routine cleaning of the scale platform. In addition, self-checkout scales typically receive a substantial amount of abuse from customers, resulting in offsets to the scale platform and hysteresis.

A scale with no merchandise item on its platform should output a reference value of zero before the scale is used. If the scale associated with the product scanner is not properly zeroed, the scale will provide incorrect products weights, resulting in incorrect prices paid by customers. Similarly, if the bagging area scale is not properly zeroed, the scale will output incorrect weights for scanned items, resulting in delays for security purposes. Thus, when a scale with no merchandise item on its platform outputs a reference value other than zero, the self-checkout terminal provides an alarm of some fashion indicating that the scale must be reset to zero before it can be used. This alarm is typically sent to a self-checkout attendant monitoring a plurality of self-checkout terminals from a RAP (Remote Assistant Program) stand.

In order to reset a scale to zero, the RAP attendant must approach the non-zeroed scale and press a reset button on the scale. The reset button may be externally visible on the scale or may be contained behind a door or other covering. Before pressing the reset button, the attendant is asked to ensure that no items or debris have been left on the scale, causing the scale to read other than zero. Once the scale is cleared of any debris, the assistant presses the reset button, and the scale goes through a reset process such that the new reference weight is the "zero" weight for the scale. Such reset zero processes are well known in the art, such as disclosed in U.S. Patent No. 4,751,661 and U.S. Patent No. 5,086,879.

In the self-checkout process, the reset zero procedure is particularly problematic because the attendant must leave the RAP stand to press the zero reset button. If the attendant is with another customer or attending to other duties at the RAP stand, it may take some time for him or her to reach the particular terminal in need of a zero reset. In the meantime, customers may be waiting in line, unable to use the terminal in need of a zero reset. This may cause frustration amongst customers with the store and/or the self-checkout process in general. Furthermore, as discussed above, self checkout scales are particularly vulnerable to zero reset situations. Thus, the attendant may spend a substantial amount of time between the RAP stand and terminals in need of a zero reset, thus taking the attendant away from his or her duties at the RAP stand. Accordingly, it would be desirable to provide a self-checkout system wherein the assistant is not required to spend substantial amounts of time traveling to individual self checkout terminals performing zero resets.

A self-checkout system comprises a plurality of self-service checkout stations and at least one remote assistant terminal. Each of the plurality of self-service checkout stations comprises a barcode scanner, at least one scale, and a payment terminal, thus, allowing customers of a retail establishment to enter items for purchase and pay for such items without the assistance of a cashier. The remote assistant terminal is in communication with each of the plurality of self service checkout stations, allowing an assistant to monitor the operations at each of the plurality of self-service checkout stations.

Occasionally, the one or more scales located at one of the self-service checkout stations will require a reset zero operation. In order to trigger a reset zero operation, a reset zero option is provided at the remote assistant terminal. For example, the reset zero option may be provided on an assistant monitor at the remote assistant terminal. In one embodiment, the assistant monitor is a touch-screen and the reset zero option is a button on the touch-screen. Touching the reset zero button on the screen activates the reset zero option. Following activation of the reset zero option, a reset zero instruction is delivered to a processor and the reset zero operation for the scale begins.

The system also provides a notice feature which tells the assistant that activation of a reset zero option is required to trigger a reset zero operation. The notice provided to the assistant is visible from the remote assistant terminal. In one embodiment, this notice is provided at the self-service checkout station that includes the scale. Such notice may take the form of a colored light. In another embodiment, the notice is provided at the remote assistant terminal. This notice may take the form of an audible alarm, visual alarm, or other indicator provided on the monitor of the remote assistant terminal.

Accordingly, a self-service checkout system as disclosed herein provides the ability to perform a reset zero operation without the need to trigger the reset zero operation at a reset zero option provided at the self-checkout station. In particular, the reset zero operation may be triggered from the remote assistant terminal. This saves valuable time for the assistant, as the assistant is not required to travel to the self-service checkout station in order to trigger the reset zero operation. In one embodiment, the reset zero operation may be automatically triggered without the need for assistant activation of the reset zero option.

Embodiments of the present invention will now be described, by way of example, with reference to the accompanying drawings, in which:
FIG. 1 shows a plan view of a self-service checkout system including a scale with remote reset;
FIG. 2 shows a perspective view of an exemplary self-service checkout station of the self-service checkout system of FIG. 1;
FIG. 3 shows a front view of an exemplary remote assistant terminal of the self-service checkout system of FIG. 1;
FIG. 4 shows an exemplary screen view of the remote assistant terminal of FIG. 4; and
FIG. 5 shows a flowchart of steps taken by the system during notice of a requirement for a reset zero operation and triggering of the same.

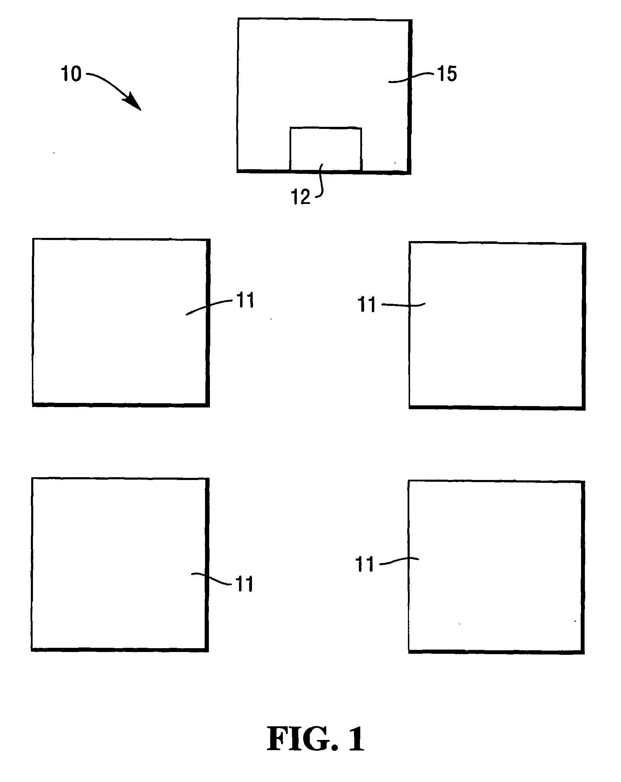

As shown in FIG. 1, a self-service checkout system 10 includes a plurality of self-service checkout stations 11 and at least one remote assistant terminal 12. Each of the plurality of self-service checkout stations 11 is in bi-directional communication with the at least one remote assistant terminal 12 located at a RAP stand 15. Communication between the self-service checkout stations 11 and the remote assistant terminal 12 may be via a hard-wired connection or via a wireless connection. The self-service checkout stations 11 are designed for interaction with customers wishing to purchase items from the store. The at least one remote assistant terminal 12 is designed for interaction with a self-service checkout assistant employed by the store. The remote assistant terminal 12 provides the assistant with the ability to monitor the activity at each of the plurality of self-service checkout stations 11, and provide assistance to customers when needed. Such assistance may be provided remotely through the assistant terminal 12 or may require the assistant to personally assist a customer.

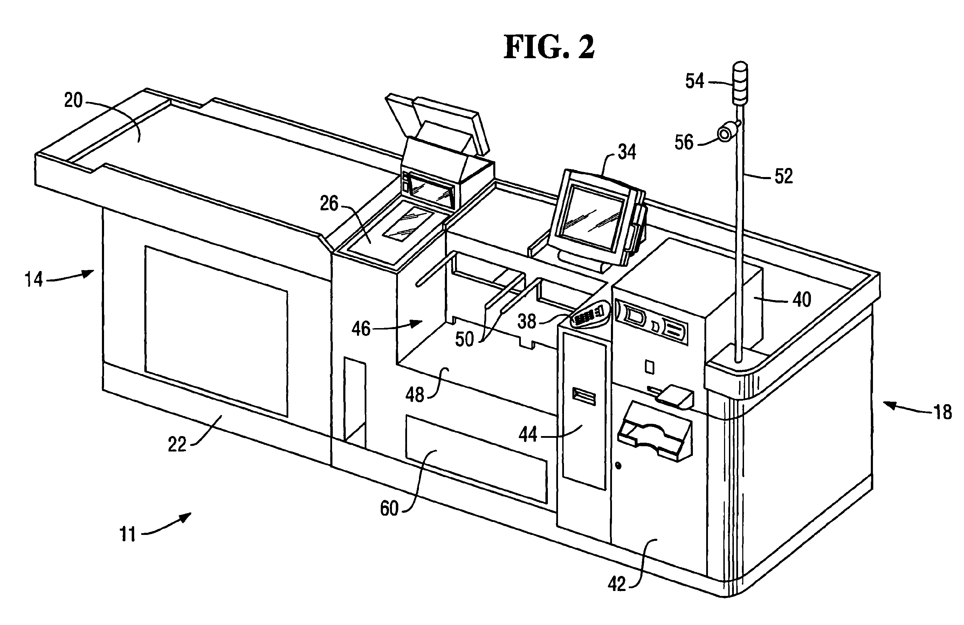

With reference now to FIG. 2, a self-service checkout station 11 may include a feeder unit 14 and a checkstand 18. Feeder unit 14 includes a feeder belt 20 and housing 22 for the motor and control circuitry that operates feeder belt 20. Feeder unit 14 is movably coupled to checkstand 18 so the feeder belt may be aligned with scanner/scale unit 26. Checkstand 18 includes scanner/scale unit 26, consumer terminal 34, a payment terminal 38 for entry of payment data, and receipt printer 44. Scanner/scale unit 26 uses a laser shining on a glass or other transparent platen to input data from barcodes applied to products or packages. Unit 26 also includes a scale for measuring the weight of items that are sold on a price/unit of weight basis. The weight measured by the scale may be displayed at consumer display monitor 34. As explained in further detail below, consumer display monitor 34 is also operable to indicate that the scale should be reset to zero and attendant assistance is required. Display monitor 34 is further operable to display other information. For example, consumer display monitor displays data related to specific items as they are scanned through scanner/scale unit 26 or otherwise included in the transaction. Payment terminal 38 may be any known POS terminal that incorporates a keypad and card reader to support credit card, debit card, and/or other payment methods. Receipt printer 44 provides a consumer with a receipt itemizing the items purchased and the method of payment.

Separating receipt printer 44 and scanner/scale unit 26 is a bagwell 46, which has a floor that is adjoined to three upright walls. The floor of bagwell 46 may rest on scale 48. Consumers place scanned items in bags hanging from rails 50 in bagwell 46 so the items rest on the floor of bagwell 46 and scale 48. Security scale 48 compares item weight data derived from scanner/scale 26 for produce items or weight data retrieved from a database for items having a unit price code to the weight differential measured by scale 48 to verify that the item scanned is placed on scale 48. Security application programs operating within checkout station 11 monitor security scale 48 to determine whether items not scanned have been added to the security scale area. An anomalous condition that requires investigation may be signaled by lighting a warning or alert light color within the tri-color indicator 54 mounted at the terminal end of indicator pole 52 of checkstand 18. Indicator pole 52 may also have mounted thereon a security camera 56 for providing a video signal to a security officer surveillance area or to some storage media. A database, disk drive, or other computer peripheral required for station operation may be housed within peripheral tray 60 located within checkstand 18. Checkstand 18 also includes currency acceptor 40 for receiving units of paper currency and coins from a consumer as payment for a transaction while cash dispenser 42 returns change to a consumer or funds requested from a debit account or the like.

With continued reference to FIG. 2, a consumer may place items on feeder belt 20 and belt 20 is driven to bring items to the end of belt 20 where a shut-off mechanism stops belt 20. The consumer may commence a transaction by removing items from belt 20 and moving them, one at a time, over scanner/scale 26 for item product data retrieval and/or weighing. The scanned items may then be placed in bags on security scale 48. Once all of the items are scanned, a consumer may provide payment through payment terminal 38 or currency acceptor 40, receive change from dispenser 42, and a receipt from printer 44. The consumer may then remove the bags from security scale 48 and leave station 11 to complete a transaction.

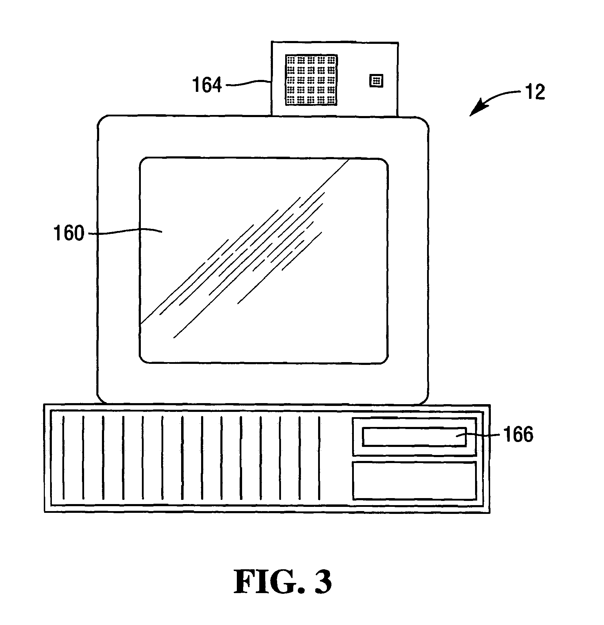

Referring now to FIG. 3, there is shown an exemplary assistant terminal which may be utilized as the remote assistant terminal 12 of the system. The remote assistant terminal 12 includes an assistant display monitor 160, a speaker 164, and a printer 166. The functionality of the remote assistant terminal 12 may be integrated with assisted checkout terminals (i.e. checkout terminals which are operated by a retail clerk). For example, the functionality of the remote assistant terminals 12 may be integrated into assisted checkout terminals which are already in service or otherwise present in the retailer's store.

As with the consumer display monitor 34, the assistant display monitor 160 is preferably a known touch screen monitor which can generate data signals when certain areas of the screen are touched by the retail clerk operating the remote assistant terminal 12. The touch screen is provided to allow the retail clerk operating the remote assistant terminal 12 to enter a text message which may be displayed on one of the display monitors 34 associated with a particular self-service checkout station 11. Moreover, as discussed below in greater detail, if the customer operating one of the self service checkout stations 11 requires assistance or otherwise requests intervention, the retail clerk operating the remote assistant terminal may touch a particular location or "button" on the touch screen associated with the remote assistant terminal 12 in order to enter an acknowledgment code which causes a message to be displayed on the display monitor 132 of the self-service checkout station 11 thereby indicating to the customer that he or she may approach the remote assistant terminal 12.

As described above, the retail clerk operating the remote assistant terminal 12 may provide assistance to a customer operating one of the self-service checkout terminals 11. For example, if the customer indicates that he or she needs assistance in completing his or her checkout transaction by, for example, touching a particular key of a consumer keypad 34 (not shown) or touching a particular location on the touch screen of the consumer display monitor 32, the retail clerk operating the assistant terminal 12 may cause the customer's checkout transaction to be suspended and thereafter instruct the customer to approach the remote assistant terminal 12. Moreover, if the customer operating the self-service checkout station 11 performs certain functions which require intervention, even if the customer doesn't affirmatively request such intervention, the retail clerk operating the assistant terminal 12 may likewise cause the customer's checkout transaction to be suspended and thereafter instruct the customer to approach the remote assistant terminal 12. For example, the retail clerk operating the remote assistant terminal 12 may be required to intervene in the customer's transaction to enter the customer's coupons if the customer attempts to enter coupons into the self-service checkout station 11 (unless the self-service checkout station 11 is equipped with a coupon acceptor). It should therefore be appreciated that the customer may require assistance or otherwise request intervention for such reasons as, for example, (1) collection of coupons, (2) acceptance of tendered checks, (3) handling of credit card verification exceptions, and (4) itemization of items that the customer is unable to scan or otherwise enter.

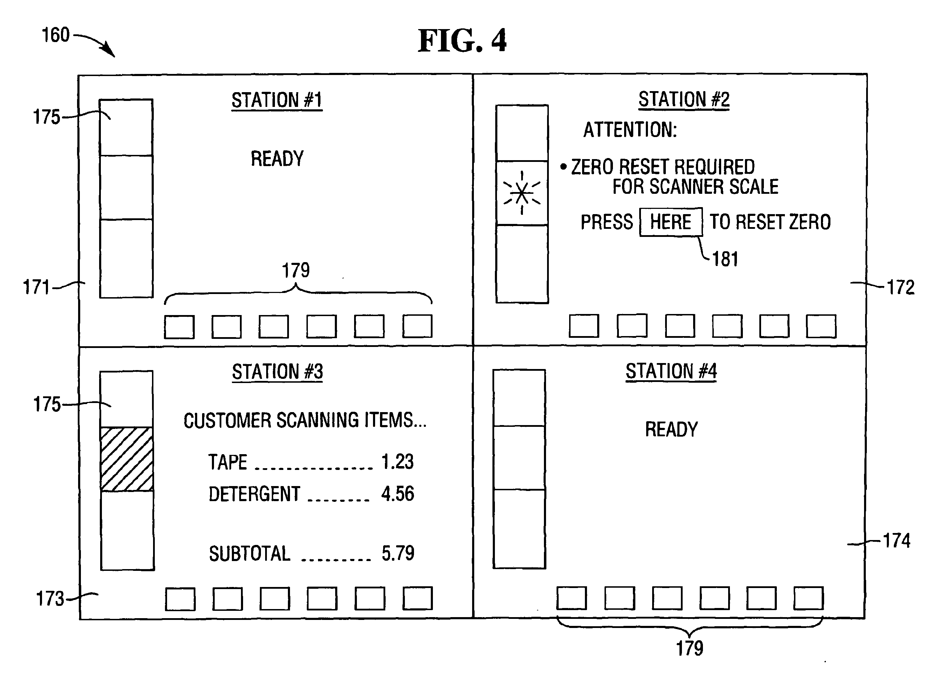

In addition to the above operations, the remote assistant terminal 12 provides the RAP assistant with the ability to remotely initiate/trigger a reset zero operation for a scale of a particular checkout station 11. As shown in FIG. 4, the assistant display monitor 160 of the remote assistant terminal 12 includes a screen 161 that simultaneously provides data related to a plurality of checkout stations. In the example of FIG. 4, the screen 161 includes four quadrants 171-174 with information about one of four self-checkout stations provided in each quadrant.

The left side of each quadrant 171-174 shows a representative plan view 175 of each checkout station. If a problem exists for a checkout station, the location of the problem will flash on the plan view 175 of the checkout station to assist the attendant in identifying the problem. The right side of each quadrant provides text 177 describing the status of the checkout station and other data that may be important to the assistant. Along the bottom portion of each quadrant are a series of touch-screen buttons 179 that may be touched by the assistant to facilitate the customer checkout process. For example, the buttons 179 may include buttons that allow the assistant to manually enter a price for an item that can not be scanned.

In the example of FIG. 4, the first quadrant 171 of the screen 161 shows that self-checkout station #1 is inactive, but ready to checkout a new customer. Similarly, the fourth quadrant 174 shows that self-checkout station #4 is inactive. The third quadrant 173 of the screen 161 shows that self-checkout station #3 is assisting a customer with the checkout process. The third quadrant 173 lists each item as it is scanned by the customer along with a running customer total, allowing the assistant to monitor the customer transaction as it is processed.

The second quadrant 172 in the screen 161 of FIG. 4 shows the attendant that the customer requires attention before continuing with the transaction. In particular, the second quadrant 172 provides a report to the attendant indicating that the scanner scale at checkout station #2 is not accurate, as it is not properly zeroed. A scale is not properly zeroed if the scale fails to stabilize by returning to a zero output, or within an acceptable margin of error from zero, within a predetermined time following removal of an item from the scale. For example, if the scale stabilizes at an output of greater than 0.005 lbs., the system may recognize that the scale failed to return to zero, and may require a reset zero operation before the transaction using the self-checkout terminal can continue. To facilitate the reset zero process in an efficient manner, the attendant is presented with a reset zero remote interface by providing a reset zero option on the screen 161 of the assistant display monitor 160.

Before selecting the reset zero option, the attendant briefly looks to make sure that the scale platter is free of merchandise items or debris. If the platter is not free of items or debris, the attendant may ask the customer to remove all items and visible debris from the scanner scale. In one embodiment, the system automatically instructs the customer to remove all items and visible debris from the scanner scale when a reset zero operation is required. After confirming that all items and visible debris are cleared from the scanner scale, the attendant simply touches the reset zero button 181 on the screen 161. After touching this button, the system performs the reset zero operation for the scale requiring the operation. Accordingly, the system provides the assistant with the ability to perform a reset zero operation without ever leaving the remote assistant terminal. It will be recognized that the reset zero option may be provided in numerous forms. For example, the reset zero option may be provided as a button on the screen such as a temporary button 181 or one of the standard buttons 179. In another example, the reset zero option may be provided as a physical button or other selection device provided at the remote assistant terminal.

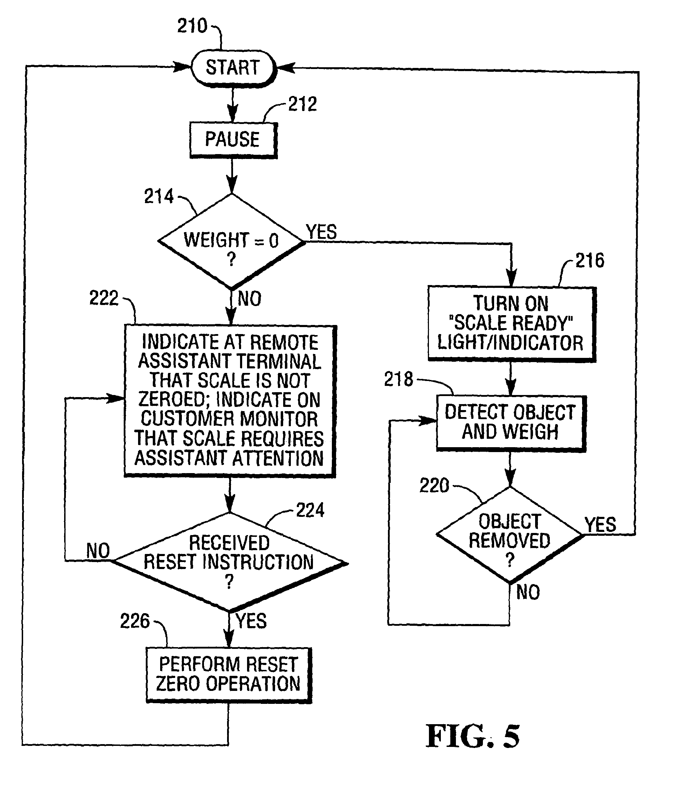

FIG. 5 shows an exemplary flowchart of the process steps used by the system during a remote reset zero operation. The process starts at step 210 with no merchandise items sitting on the platter of the scale. This should be the case either at system start up or after an item has just been weighed and removed from the scale. In step 212, a brief pause is inserted (e.g., 1 second) to allow the scale to stabilize. Following the pause, the system determines in step 214 if the weight of the scale is zero. If the weight of the scale is zero, the system proceeds to step 216 where a "scale ready" indicator is shown on the customer display monitor. The system then waits for an item to be placed on the scale in step 218 and weighs the object. Once the object is removed in step 220, the system returns to step 210 and begins the process again. However, if the scale does not return to zero (or within a predefined error margin) in step 214, the system indicates that the scale should be reset in step 222. Here, the system indicates that a reset zero is required for the scale at the remote assistant terminal. The system also provides an indication to the customer that assistance is required concerning the scale. For example, the self-checkout terminal may provide an audible message to the customer that assistance is required and asking the customer to please wait for the assistant to resolve the problem. A similar text message may also be provided on the customer display monitor.

After the assistant is notified of the need for a reset zero operation for the scale, the assistant briefly looks at the scale to confirm that prominent foreign matter, including merchandise items and large debris, has been removed from the scale. If foreign matter is visible to the assistant, the assistant may ask the customer to remove all items from the scale. If foreign matter is not visible to the assistant, the assistant touches the reset zero button provided on the screen of the remote assistant terminal, thus sending the reset zero instruction for the scale to a processor which performs the reset zero operation for the scale.

The system recognizes receipt of the reset zero instruction in step 224 and proceeds with a reset zero operation in step 226. As discussed previously, numerous reset zero operations are known in the art. Once the reset zero operation is complete, the process returns to the start. If the scale is properly zeroed, the "scale ready" indicator will be shown to the customer at the customer display monitor. At the same time, the remote assistant terminal will no longer indicate that a reset zero is required for the scale.

In the above-described embodiment, a self-checkout system is disclosed wherein the reset zero operation for a scale is not triggered by selection of a reset zero option at the self-checkout station where the scale is located. In alternative embodiment of a self-checkout system wherein the reset zero option for a scale is not triggered by selection of a reset zero operation at the self-checkout station, the reset zero function occurs automatically. In this embodiment, when the system realizes that a scale is not properly zeroed, operations at the checkout station are temporarily suspended and the customer is asked to remove all foreign matter including merchandise items and debris from the scale or bagging area. A sensor, such as an optical sensor, may be provided in association with the scale to ensure that all prominent foreign matter has been removed from the scale. If the optical sensor does not detect any foreign matter, the system automatically performs the reset zero operation. For example, in the flowchart of FIG. 5, step 222 may be modified such that the customer is asked to remove all foreign matter from the scale before a reset zero operation is performed. Once the system detects no foreign matter on the scale, the system then proceeds immediately to step 226 where a reset zero operation is performed. In this embodiment, the assistant may be notified at the assistant display monitor that a reset zero operation is proceeding for a particular scale, but there is no need for the assistant to select the reset zero option. Instead, the system performs the reset zero operation automatically.

Although the present invention has been described with respect to certain preferred embodiments, it will be appreciated by those of skill in the art that other implementations and adaptations are possible. For example, various interface arrangements are available for providing the reset zero option to the attendant at the remote assistant terminal. As another example, additional indicators of the need for a zero reset may be used, such as a flashing red light at the tri-color indicator of the checkout station requiring a zero reset operation. Furthermore, while the system has been described primarily with respect to scanner scales, it should be recognized that the system may be used with other scales provided on a self-checkout station, such as a bag area scale. Moreover, there are advantages to individual advancements described herein that may be obtained without incorporating other aspects described above. Therefore, the scope of the appended claims should not be limited to the description of the preferred embodiments contained herein.

## Claims

1. A self-checkout system comprising:
a) a plurality of self-service checkout stations, each of the plurality of self-service checkout stations including a product scanner and a payment terminal, and at least one of the plurality of self-service checkout stations comprising at least one scale; and
b) at least one remote assistant terminal in communication with each of the plurality of self-service checkout stations, wherein the remote assistant terminal is configured to provide a reset zero option for the at least one scale of the at least one self-service checkout station.

2. A self-checkout system as claimed in claim 1 wherein activation of the reset zero option at the remote assistant terminal delivers a reset zero instruction for the at least one scale of the at least one self-service checkout stations.

3. A self-checkout system as claimed in claim 2 wherein a reset zero operation is conducted for the at least one scale upon receipt of the reset zero instruction.

4. A self-checkout system as claimed in any preceding claim, wherein the at least one scale comprises an integrated scale and scanner.

5. A self-checkout system as claimed in any preceding claim, wherein the at least one scale comprises a bag area scale.

6. A self-checkout system as claimed in any preceding claim, wherein the at least one self-service checkout station is operable to provide a notice that the at least one scale of the at least one self-service checkout station requires a reset zero operation.

7. A self-checkout system as claimed in any preceding claim, wherein the remote assistant terminal is operable to provide a notice that the at least one scale of the at least one self-service checkout station requires a reset zero operation.

8. A method of operating a self-service checkout system comprising:
a) providing a plurality of self-service checkout stations, at least one of the plurality of self-service checkout stations including at least one scale;
b) providing a remote assistant terminal in communication with the plurality of self-service checkout stations;
c) displaying a notice that the at least one scale of the self-service checkout station is not zeroed, wherein the notice is visible from the remote assistant terminal;
d) providing a reset zero option for the at least one scale at the remote assistant terminal; and
e) activating the reset zero option at the remote assistant terminal, wherein activation of the reset zero option results in a reset zero operation for the at least one scale.

9. A method as claimed in claim 8, wherein the notice that the at least one scale of the self-service checkout station is not zeroed is displayed on a monitor of the remote assistant terminal.

10. A method as claimed in claim 8 or claim 9, wherein the step of activating the reset zero option is performed by touching a button on a monitor of the remote assistant terminal.

11. A method as claimed in any of claims 8 to 10, further comprising the step of checking for foreign matter on the at least one scale before the step of activating the reset zero option.

12. A method as claimed in claim 11 further comprising the step of removing the foreign matter from the at least one scale before the step of activating the reset zero option.

13. A method as claimed in any of claims 8 to 12, further comprising the step of displaying a scale ready indicator following performance of the reset zero operation.
